# EUROPÄISCHE PATENTANMELDUNG

(11) **EP 4 714 871 A1**
(43) Veröffentlichungstag der Anmeldung: **25.03.2026**
(21) Anmeldenummer: 25201665.4
(22) Anmeldetag: 11.09.2025
(51) Int. Cl.: B65G 43/08, B65G 47/53, B65G 47/76, B65G 47/82

(54) **AUSWERFERVORRICHTUNG**

(30) Priorität: 19.09.2024 DE 202024105384 U
(71) Anmelder: WIPOTEC GmbH, 67657 Kaiserslautern (DE)
(72) Erfinder: Schmidt, Kay-Eric, 67678 Mehlingen (DE)
(74) Vertreter: Eder Schieschke & Partner mbB

(57) **Zusammenfassung**

Die Erfindung betrifft eine Auswerfervorrichtung zum gezielten Aussortieren von Produkten aus einem Förderstrom, bei der ein beweglicher Auswerfer in einer Doppelfunktion eine Anschlagfläche und eine Leitfläche mit einem definierten Leitprofil umfasst, so dass der Auswerfer sowohl zum aktiven Ausstoßen einzelner Produkte durch eine seitliche Schubbewegung als auch zur Aussortierung durch die Förderbewegung der Produkte geeignet ist.

## Beschreibung

Die vorliegende Erfindung betrifft eine Auswerfervorrichtung mit einem zugehörigen Auswerfer. Derartige Vorrichtungen sind in unterschiedlichen Arbeitsweisen bekannt (z.B. Schieber/Pusher, Blasdüsen, Sortierweichen, Sortierklappen) und werden verwendet, um nichtkonforme Produkte automatisch aus einem Produktstrom auszusortieren. Für schnelles Aussortieren einzelner Objekte, die beispielsweise auf einem Förderband in einer Förderrichtung transportiert werden, kommen als Auswerfer bevorzugt Blasdüsen oder Pusher infrage. Blasdüsen sind im Betrieb jedoch relativ laut und haben einen hohen Druckluftverbrauch.

Auch die an sich bekannten Pusher, die quer zur Förderrichtung vor und zurück bewegt werden, um dabei mit einer Anschlagfläche ein Produkt seitlich zu beaufschlagen, sind nicht für jeden Anwendungsfall geeignet. So kann es vorkommen, dass zum Beispiel im Falle einer Störung alle Produkte, vor allem beim erneuten Anlauf der Produktion, aus dem Produktstrom herausgeleitet bzw. vom Förderband herunter geführt werden müssen (Bandräumung). Insbesondere bei kurzen Produktabständen bzw. hoher Fördergeschwindigkeit muss der Pusher dann in kurzen Zeitabständen betätigt werden mit dem Risiko, eventuell nicht alle Produkte zu erfassen. Darüber hinaus erfordern unterschiedliche Produkte oft unterschiedliche Auswerfer bzw. Auswerfergeometrien, denn nicht jedes Produkt darf zum Sortieren seitlich mit einem Stoßimpuls beaufschlagt werden, wenn beispielsweise dadurch eine Beschädigung des Produktes zu befürchten ist. Für unterschiedliche Produkte sind dann unterschiedliche bzw. zusätzliche Auswerfer erforderlich, was den apparativen und konstruktiven Aufwand erhöht.

Aufgabe der Erfindung war es daher, die vorgenannten Nachteile zu überwinden. Die Aufgabe wird gelöst mit einer Auswerfer Vorrichtung nach Anspruch 1 und eine Anordnung nach Anspruch 11.

Die Erfindung basiert auf der Erkenntnis, einen auch für unterschiedliche Produkte und Anforderungen geeigneten Auswerfer dadurch ausbilden zu können, dass dieser zusätzlich zu der üblichen Anschlagfläche eine Leitfläche umfasst, um auch über diese Leitfläche Produkte aus der Förderrichtung seitlich heraus zu lenken. Damit übernimmt der Auswerfer in erfinderischer Weise eine Doppelfunktion, die ihn dazu befähigt, auch ohne zwischenzeitliche Umrüstung entweder unterschiedliche Produkte (über die Leitfläche oder die Anschlagfläche) auszusortieren oder unterschiedliche Sortierfunktionen zu übernehmen (gezielt einzelne Produkte über die Anschlagfläche aussortieren oder alle Produkte vom Band herunter fördern über die Leitfläche).

Die erfindungsgemäße Auswerfervorrichtung umfasst dazu einen Auswerfer, der sich in einer vorzugsweise horizontalen Längsrichtung X, einer orthogonal dazu und vorzugsweise horizontal verlaufenden Querrichtung Y und in einer zu beiden Richtungen X, Y orthogonalen und vorzugsweise vertikalen Höhenrichtung erstreckt.

Der Auswerfer ist in einer Hub-Bewegung zwischen einer Ruheposition und wenigstens einer Arbeitsposition vor- und zurückbewegbar, wobei er zumindest in der Ruheposition so weit aus dem Förderweg der Produkte zurückgezogen ist, dass diese in ihrer Förderrichtung ungehindert weiter gefördert werden können, ohne aussortiert zu werden. Vorzugsweise stimmt die Förderrichtung mit der Längsrichtung X überein.

Durch die Bewegung des Auswerfers in wenigstens eine Arbeitsposition soll erfindungsgemäß erreicht werden, dass wenigstens ein Produkt seitlich bzw. quer zur Förderrichtung beaufschlagt wird, um aus dem Förderweg heraus gelenkt oder heraus gestoßen zu werden. Erfindungsgemäß bestehen dafür aufgrund der zusätzlich vorgesehenen Leitfläche unterschiedliche Möglichkeiten, wie noch zu sehen sein wird.

Die zusätzlich zur Anschlagfläche am Auswerfer vorgesehene wenigstens eine Leitfläche dient erfindungsgemäß ebenfalls dazu, Produkte aus dem Förderstrom seitlich heraus zu leiten. Anders als die Anschlagfläche des Auswerfers, die ein auszusortierendes Produkt während der Bewegung des Auswerfers in eine Arbeitsposition stoßartig und aktiv seitlich beaufschlagt, dient die Leitfläche bevorzugt lediglich als Führung, welche die vom Förderband in Förderrichtung X gegen die Leitfläche transportierten Produkte dabei sozusagen passiv seitlich aus dem Produktstrom heraus lenkt. Besonders bevorzugt befindet sich der Auswerfer in diesem Fall bereits vollständig in einer Arbeitsposition. Höchst bevorzugt kann der Auswerfer zum Aussortieren mehrerer aufeinanderfolgender Produkte auch über einen längeren Zeitraum unverändert in der gewählten Arbeitsposition bleiben, um beispielsweise das Band beim erneuten Anlauf der Produktion zu räumen. Denkbar ist es auch, den Auswerfer nacheinander an unterschiedliche Arbeitspositionen zu verfahren, wobei in jeder Arbeitsposition ein oder mehrere Produkte auf die Leitfläche treffen können und von dort seitlich ausgelenkt werden.

Die Leitfläche ist erfindungsgemäß mit einem Leitprofil versehen, entlang dessen die gegen die Leitfläche geförderten Produkte aus dem Weg (W) seitlich heraus geleitet werden (Ausleiten). Dabei schließt das Leitprofil mit der Längsrichtung X einen konstanten oder einen sich entlang der Querrichtung Y des Auswerfers ändernden Leitwinkel (α) ein, vorzugsweise mit der Bedingung (0° < α < 90°). In einer einfachsten Ausführungsform beispielsweise ist das Leitprofil eine gerade Fläche, die schräg zur Förderrichtung X ausgerichtet ist und mit dieser einen Leitwinkel (α) von beispielsweise 45° einschließt. Ein zunächst in Förderrichtung X auf die Leitfläche auftreffendes Produkt erfährt bei der Berührung der Leitfläche eine Kraft, die aufgrund des Leitwinkels eine Komponente quer zur Förderrichtung X bzw. in Querrichtung Y enthält, sodass das Produkt, während es vom Förderband weiter in Förderrichtung X "angetrieben" wird, am Leitprofil entlang und in Querrichtung Y seitlich aus dem Produktstrom herausgeleitet wird.

Der erfindungsgemäße Auswerfer erlaubt somit das Auswerfen bzw. Ausleiten von Produkten nach unterschiedlichen Prinzipien, deren Anwendung lediglich dadurch bestimmt wird, zu welchem Zeitpunkt und wie lange der Auswerfer in eine bestimmte Arbeitsposition bewegt wird. Je nach Anwendung bzw. Produkt lässt sich der Auswerfer für jedes Produkt individuell vor und zurück bewegen, um dabei gezielt einzelne Produkte aktiv seitlich aus dem Produktstrom heraus zu stoßen, was vorzugsweise mit der Anschlagfläche geschieht. Alternativ kann er aber auch (vorzugsweise für einen längeren Zeitraum von beispielsweise mehreren Sekunden oder Minuten) in eine bestimmte Arbeitsposition verfahren und dort belassen werden, um die herannahenden Produkte gegen die Leitfläche des Auswerfers zu bewegen und dadurch passiv aus dem Produktstrom heraus zu leiten.

Vorzugsweise verläuft die Anschlagfläche und/oder die Leitfläche parallel zur Höhenrichtung Z, sodass auch Produkte unterschiedlicher Höhe in immer gleicher Weise aussortiert werden können.

Nach einer vorteilhaften Ausführungsform grenzt die Leitfläche unmittelbar an die Anschlagfläche. In einer alternativen Ausführungsform schließen die Leitfläche und die Anschlagfläche zwischen sich eine Führungsfläche ein, die sich parallel zu einer Y-Z-Ebene erstreckt. Die Führungsfläche dient dazu, ein von der Leitfläche bereits in Querrichtung Q bis an die Führungsfläche bewegtes Produkt noch ein Stück in Querrichtung Y an der Führungsfläche entlang zu führen. Abhängig von der Geschwindigkeit, mit der sich das Produkt entlang der Leitfläche und anschließend entlang der Führungsfläche bewegt, richtet die Führungsfläche die Bewegung des Produkts genau in Querrichtung Y aus, bevor es sich aufgrund seiner eigenen Geschwindigkeit seitwärts aus dem Produktstrom heraus bewegt bzw. den Auswerfer verlässt. Ohne eine solche Führungsfläche könnte es z.B. passieren, dass die Produkte am Auswerfer nur knapp vorbei rutschen und, je nach dessen Querposition, wieder zurück in den Gut-Kanal geraten (z.B. nach einer Kollision mit einem stehenden, zuvor ausgeleiteten Produkt.

Nach einer besonders vorteilhaften Ausführungsform der Erfindung umfasst das Leitprofil nicht nur einen konstanten Leitwinkel, sondern mehrere solcher Winkel oder gar einen oder mehrere Abschnitte mit einer Kurve, entlang derer sich ein Produkt seitlich aus dem Produktstrom heraus bewegt. Insbesondere mithilfe eines kurvigen Leitprofils lässt sich das Sortierverhalten der Produkte sehr gut bestimmen, um beispielsweise das Produkt stoßfrei aufzunehmen oder die Richtung vorzugeben, unter der das Produkt den Produktstrom bzw. den Auswerfer am Ende des Leitprofils verlässt. Ein kurviges Leitprofil kann ein herannahendes Produkt beispielsweise besonders sanft aufnehmen, wenn das Leitprofil zunächst nahezu parallel zur Förderrichtung verläuft in dem Bereich, wo das Produkt die Leitfläche erstmals berührt. Beispielsweise könnte ein als Viertelkreis geformtes Leitprofil Produkte besonders schonend aus der Förderrichtung X um 90° in Querrichtung Y umlenken. Andere Kurven sind ebenfalls denkbar, beispielsweise um ein Produkt möglichst effektiv in Querrichtung Y zu beschleunigen, sodass es aus eigener Kraft möglichst weit und/oder schnell aus dem Produktstrom heraus und beispielsweise auf ein angrenzendes Querband herausgeleitet wird. Die Krümmungsradien, Bogenlängen oder Geraden und Steigungen, aus denen sich das Leitprofil zusammensetzen lässt, können je nach Produkt bzw. Sortieranforderungen vorgegeben werden.

Ähnlich wie bei Verwendung der Anschlagfläche kann ein Produkt auch durch einen kurzen, impulsartigen Kontakt mit dem Leitprofil eine stoßartige Beaufschlagung erfahren und dadurch seitlich aus dem Produktstrom herausgestoßen werden. Unter Berücksichtigung des Leitwinkels bzw. des eventuell kurvigen Leitprofils an der Kontaktstelle kann so die Richtung und/oder die Geschwindigkeit, mit der das Produkt aussortiert wird, gezielt eingestellt werden. Dazu könnte beispielsweise über einen steuerbaren Antrieb die Hubgeschwindigkeit, der Zeitpunkt oder die Querposition des Produkts auf dem Förderband oder dessen Fördergeschwindigkeit in einer geeigneten Steuereinheit verarbeitet bzw. eingestellt werden, wobei die Steuereinheit auch die Ansteuerung des Auswerfers übernimmt. Weitere physikalische Größen, wie beispielsweise die Abmessungen oder das Gewicht des Produkts, können ebenfalls in die Einstellungen mit einfließen.

Die Beaufschlagung mit der Leitfläche kann dann sogar so ausgeführt werden, dass der resultierende Impuls auf das Produkt dazu führt, dass es in einer rein translatorischen Bewegung, also ohne Drehimpuls, seitlich aus dem Produktstrom herausgestoßen wird. Somit kann beispielsweise ein Abrollen eines zylindrischen Produkts entlang der Leitfläche vermieden werden, was andernfalls zu einem Abbremsen des Produkts in Längsrichtung X und somit zu einer Verkürzung des Abstands zum nachfolgenden Produkt führen würde.

Nach einer weiteren vorteilhaften Ausführungsform der Erfindung ist der das Leitprofil umfassende Abschnitt des Auswerfers als separates, vorzugsweise werkzeuglos und modulartig mit dem Auswerfer verbindbares und austauschbares Profilelement ausgebildet. So lassen sich besonders einfach je nach Anwendungsfall oder Produkt unterschiedliche Leitwinkel bzw. Leitprofile am Auswerfer einstellen bzw. vorgeben. Beispielsweise könnte das Profilelement mit einem Grundkörper des Auswerfers über eine dem Fachmann geläufige geeignete Steckverbindung (Nut-Feder, Hinterschneidung, Zapfen-Bohrung etc.) verbindbar sein, die beispielsweise durch Relativbewegung des Grundkörpers und des Profilelements in Höhenrichtung Z in bzw. außer Eingriff gebracht wird. Denkbar ist auch ein Auswerfer oder Profilelement, bei dem wenigstens ein Leitwinkel verstellbar ist, um gänzlich ohne den Austausch von Komponenten unterschiedliche Anforderungen an die Sortierung erfüllen zu können.

Das Profilelement kann auch eine Führungsfläche und/oder die Anschlagfläche enthalten. Das Profilelement und/oder der Auswerfer kann aus einem einzigen oder mehreren Materialien hergestellt sein, wobei neben allen üblichen Herstellungs- und Bearbeitungsverfahren insbesondere auch der 3-D Druck zur Herstellung und PTFE als eine besonders geeignete Materialkomponente genannt sein soll.

Vorzugsweise ist der Auswerfer dazu ausgebildet, jenseits der Ruheposition unterschiedliche Arbeitspositionen, d. h. unterschiedliche Positionen in Querrichtung Y einzunehmen oder anzufahren. Dadurch ist es vorteilhaft möglich, den Auswerfer beispielsweise zwischen zwei Hüben aus einer ersten Arbeitsposition nicht ganz zurück bis in die Ruheposition, sondern in eine zweite Arbeitsposition (Vorhalteposition) zurückzufahren, die bereits ausreicht, um den ungestörten Weitertransport von Produkten in Förderrichtung X zu ermöglichen oder ein auszusortierendes Produkt vor der Hub-bewegung ausreichend hintergreifen zu können. Ein weiterer Vorteil der mehreren Arbeitspositionen ergibt sich dann, wenn die Produkte auf einem Förderband auf unterschiedlichen Querpositionen an den Auswerfer herangeführt werden. Die jeweilige Querposition eines herannahenden Produkts (die über geeignete Sensoren erfasst werden könnte) bestimmt dann die jeweilige Arbeitsposition bzw. Vorhalteposition, in welche der Auswerfer verfahren werden muss, um das Produkt entweder auszusortieren oder passieren zu lassen. Als Sensoren kommen beispielsweise Lichtschranken oder Ultraschallsensoren in Frage.

Nach einer vorteilhaften Ausführungsform der Erfindung umfasst die Auswerfervorrichtung einen Servomotor oder Linearantrieb, der den Auswerfer in einer linearen Bewegung zwischen der Ruheposition und den Arbeitspositionen antreibt. Ein solcher Antrieb ist präzise und leise, und er ermöglicht - anders als übliche pneumatische Antriebe - die positionsgenaue Einnahme unterschiedlicher Arbeitspositionen.

Vorzugsweise ist die Auswerfervorrichtung mit einer Steuerung ausgestattet, welche insbesondere den Antrieb des Auswerfers ansteuert. Die Steuerung kann auch zur Hinterlegung eines Bewegungsprofils ausgebildet sein. Ein solches Bewegungsprofil regelt die Bewegung des Auswerfers nach Zeit und/oder Position und/oder Geschwindigkeit. Je nach Produkt und Produktposition auf dem Förderband können unterschiedliche Bewegungsprofile erforderlich oder geeignet sein, um ein Produkt nach bestimmten Vorgaben auszusortieren. Insbesondere kann das Bewegungsprofil sicherstellen, dass das mittels der Anschlagfläche aus dem Produktstrom herauszustoßende oder über die Leitfläche herauszuleitende Produkt das Förderband unbeschädigt und/oder mit einer bestimmten Geschwindigkeit und/oder Richtung verlässt. Dazu könnte beispielsweise die Geschwindigkeit oder Beschleunigung des Auswerfers in Abhängigkeit seiner jeweiligen Y- Position vorgegeben werden, um ein Produkt beispielsweise zunächst in einer ersten Arbeitsposition sanft aufzunehmen bzw. zu beaufschlagen, um es in einer zweiten Arbeitsposition dann mit einer angestrebten Geschwindigkeit abzustoßen.

Die Ansteuerung des Auswerfers oder ein Bewegungsprofil kann auch den Abstand einzelner Produkte zueinander in Förderrichtung berücksichtigen, um beispielsweise den geeigneten Zeitpunkt und/oder die jeweils geeigneten Arbeitspositionen zu bestimmen, in welche der Auswerfer vor oder zurück zu bewegen ist, um den nächsten Sortiervorgang ausführen zu können. Zur Ansteuerung des Auswerfers kann für einzelne Produkte alternativ oder ergänzend auch die jeweilige Querposition, also die Lage in Querrichtung Y bzw. der Y-Abstand zur Ruheposition oder zu einer ausgewählten Arbeitsposition erfasst und berücksichtigt werden. Das kann beispielsweise dazu dienen, für das nächste herannahende Produkt die optimale Arbeitsposition zu bestimmen, in die der Auswerfer zurückgezogen werden muss, um das Produkt passieren zu lassen oder um es zu kontaktieren, oder um die Arbeitsposition zu bestimmen, in die der Auswerfer vorgeschoben werden muss, um das Produkt mit der Anschlagfläche aus dem Produktstrom heraus zu stoßen oder mittels der Leitfläche heraus zu leiten.

Vorzugsweise ist die Auswerfervorrichtung dazu ausgebildet, die Geschwindigkeit und/oder die Richtung, mit der sich ein ausgeleitetes Produkt nach dem Kontakt mit dem Auswerfer von diesem in Querrichtung fortbewegt, gezielt einzustellen. Dies geschieht vorzugsweise über eine geeignet gewählte Form der vorgenannten Leitfläche und/oder über ein speziell ausgewähltes Bewegungsprofil für den Auswerfer, wobei in beiden Fällen vorzugsweise auch die Fördergeschwindigkeit der Produkte berücksichtigt wird, mit welcher diese in Längsrichtung X gefördert werden, bevor sie den Auswerfer kontaktieren.

Nach einer vorteilhaften Ausführungsform der Erfindung ist die Auswerfervorrichtung an einem ersten Förderband angeordnet, welches dazu ausgebildet ist, einen Strom von Produkten in Längsrichtung X zu fördern. Der Auswerfer ist dabei so positioniert, dass er in der vorstehend beschriebenen Weise ausgewählte Produkte aus dem Produktstrom ausstoßen oder ausleiten kann in Richtung auf ein ebenfalls an der Auswerfervorrichtung angeordnetes zweites Förderband, dessen Förderrichtung vorzugsweise orthogonal zur Längsrichtung X verläuft. Alternativ kann statt eines zweiten Förderbands auch ein Sammelbehälter oder allgemein ein Sammelbereich vorgesehen sein, um die ausgeleiteten Produkte aufzunehmen. Durch eine geeignet gesteuerte Bewegung des Auswerfers können so gezielt Produkte des Produktstroms entweder auf dem ersten Förderband belassen und weiter gefördert oder auf das zweite Förderband aussortiert oder umgelenkt werden. Das erste Förderband muss nicht an der Auswerfervorrichtung befestigt sein, es kann z.B. auch von einem separaten Gestell getragen werden. Gleiches gilt für ein zweites Förderband oder einen Sammelbehälter. Entscheidend ist für die erfindungsgemäße Anordnung lediglich die funktionale Wechselwirkung der Komponenten miteinander.

Obwohl der erfindungsgemäße Auswerfer bevorzugt für diskrete Produkte geeignet ist, ist er durchaus auch zum Ausleiten beispielsweise von Schüttgut oder langen Produktketten geeignet, welches durch die in den Förderweg bewegte Leitfläche kontinuierlich seitlich aus dem Produktstrom heraus herausgeleitet werden kann.

Um die auftretenden Massenkräfte bei der Bewegung des Auswerfers möglichst klein zu halten, sieht eine Ausführungsform der Erfindung vor, den Auswerfer oder ein Profilelement mit wenigstens einer Ausnehmung zu versehen, um dadurch einen materialfreien Bereich zu schaffen. Die Ausnehmung kann auch als Griffmulde für die manuelle Handhabung des Auswerfers oder Profilelements verwendet werden.

Denkbar ist es ferner, an dem Auswerfer Mittel zur Auswerfergegenkontrolle vorzusehen. Eine solche Auswerfergegenkontrolle ermöglicht die Überprüfung eines vorzunehmenden oder bereits erfolgten Auswerfevorgangs, um beispielsweise festzustellen, ob ein bestimmtes Produkt tatsächlich aussortiert wird bzw. wurde, oder nicht. Als dafür geeignete Mittel käme beispielsweise eine Kamera infrage, die das Umfeld des Auswerfers optisch erfasst und mit Mitteln zur Bildauswertung gekoppelt ist. Denkbar ist alternativ oder ergänzend auch ein RFID-Lesekopf, der die Produkte, wenn sie sich dem Auswerfer annähern oder ihn berühren, erfassen kann. Zur Aufnahme dieser Mittel kann der Auswerfer geeignete Halterungen vorsehen, um die Mittel austauschbar daran befestigen zu können. Das Ergebnis einer Auswerfergegenkontrolle kann in einer Steuerung aufbereitet oder dieser übermittelt werden und Einfluss nehmen auf die weitere Steuerung des Auswerfers.

Nachfolgend soll eine Ausführungsform der Erfindung anhand eines Figurenbeispiels näher erläutert werden. Dabei zeigt
- Figur 1: eine perspektivische Ansicht einer Anordnung der Auswerfervorrichtung mit zwei Förderbändern, und
- Figur 2: eine vergrößerte Detailansicht eines erfindungsgemäßen Auswerfers.

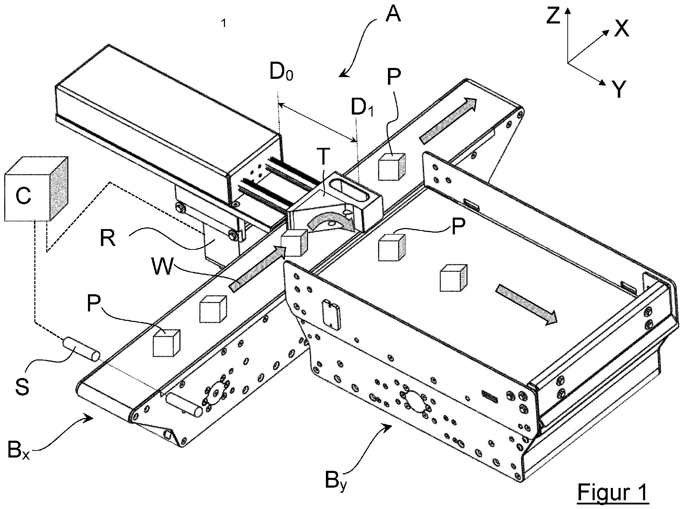

In Figur 1 ist ein erstes Förderband Bₓ zu sehen, welches dazu vorgesehen ist, diskrete Produkte P eines Produktstroms in einer Förderrichtung zu fördern, die zugleich als Längsrichtung X bezeichnet wird. Angrenzend an das erste Förderband verläuft ein zweites Förderband By in einer zur Längsrichtung X orthogonalen, horizontalen Querrichtung Y, um aus dem Produktstrom aussortierte Produkte P zu übernehmen und in Querrichtung Y weiter zu fördern. Die verschiedenen Förderwege sind über getönte Pfeile angedeutet.

Die Anordnung umfasst ferner eine Auswerfervorrichtung A, welche dazu ausgebildet ist, ausgewählte Produkte P vom ersten auf das zweite Förderband B_{X}, B_{y} zu stoßen oder zu leiten. Dazu umfasst die Auswerfervorrichtung A einen von einem Servomotor R angetriebenen Auswerfer T, der ausgehend von einer Ruheposition D₀ in Querrichtung Y in verschiedene Arbeitspositionen (D₁, D₂...) vor und zurück verfahrbar ist. Je nach Arbeitsposition ragt er dabei in den Förderweg der Produkte P auf dem ersten Förderband B_{X} hinein oder gibt diese Produkte für die ungehinderte Weiterförderung in Längsrichtung X frei. In der beispielhaft dargestellten ersten Arbeitsposition D₁ ragt der Auswerfer T in den Produktstrom hinein, sodass ankommende Produkte P gegen eine Leitfläche L des Auswerfers T gefördert werden, wodurch die Produkte P aus dem Produktstrom heraus in Querrichtung Y auf das zweite Förderband B_{y} umgelenkt werden.

Die Bewegung des Auswerfers T wird über eine Steuerung C ermöglicht, welche einerseits den Servomotor R ansteuert, und im dargestellten Beispiel auch das Signal eines Sensors S empfängt und auswertet, der stromaufwärts des Auswerfer T am ersten Förderband B_{X} angeordnet ist und dazu dient, die Position oder den Abstand einzelner Produkte zueinander in Längsrichtung X zu erfassen, um diese Information für die Ansteuerung des Auswerfers T berücksichtigen zu können.

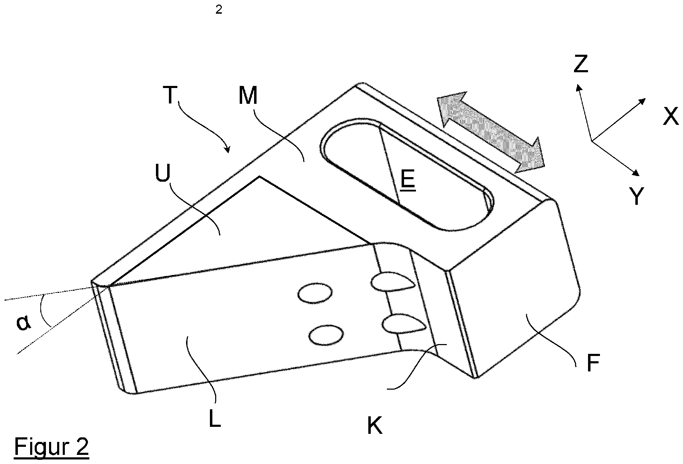

In Figur 2 ist der Auswerfer T in vergrößerter Ansicht dargestellt. Er erstreckt sich in die drei zueinander jeweils orthogonalen Richtungen X, Y und Z. Seine in Figur 2 gezeigte Ausrichtung entspricht derjenigen aus Figur 1, wobei mit einem getönten Doppelpfeil die Richtungen angedeutet sind, in welche der Auswerfer T vor und zurück bewegbar ist. Der Auswerfer T umfasst einen im Wesentlichen quaderförmigen Grundkörper M, der an einem in Querrichtung Y gesehen vorderen Ende mit einer Anschlagfläche F ausgestattet ist, die sich parallel zu einer X-Z-Ebene erstreckt. Die Anschlagfläche F ist dazu vorgesehen, ein Produkt P während einer Vorschubbewegung des Auswerfers T in Querrichtung Y seitlich mit einem Impuls zu beaufschlagen und dadurch aktiv aus dem Produktstrom heraus in Richtung auf das zweite Förderband B_{y} zu stoßen.

Der Auswerfer T umfasst ferner eine nicht näher bezeichnete Aufnahme, um darin ein modulartiges Profilelement U einzusetzen und dieses leicht austauschen zu können. Bevorzugt ist das Profilelement werkzeuglos am Grundkörper befestigbar, beispielsweise mithilfe eines nicht näher dargestellten Rastmechanismus', eine Kombination aus Vorsprüngen und Hinterschneidungen oder ähnlichen, dem Fachmann an sich bekannten Befestigungsvarianten.

Im dargestellten Beispiel hat das Profilelement U im Wesentlichen die Form eines dreiseitigen Prismas, welches mit 2 zueinander orthogonal verlaufenden Seiten an dem Grundkörper M bzw. in der von ihm gebildeten Aufnahme anliegt. Die dritte Seite bildet eine erfindungsgemäße Leitfläche L, die im dargestellten Beispiel eben ist, parallel zur Z-Richtung verläuft und mit der Längsrichtung X einen Leitwinkel α einschließt. Der Leitwinkel liegt in dieser Ausführungsform zwischen 0° und 90°, etwa bei 40°. Dadurch bildet die Leitfläche eine schräge Führung für Produkte P, die vom Förderband Bₓ gegen diese Leitfläche L gefördert werden, sodass die Produkte entlang der Leitfläche in Querrichtung Y (passiv) aus dem Produktstrom heraus geleitet werden, wie es anschaulich auch in Figur 1 dargestellt ist.

An dem Grundkörper M können durch den Austausch des Profilelements U unterschiedliche Leitflächen vorgesehen werden, die beispielsweise auch gekrümmt verlaufen können. So kann zu jedem Produkttyp eine besonders geeignete Leitfläche vorgesehen werden, um die Produkte beispielsweise besonders schonend oder besonders schnell aus dem Produktstrom heraus zu leiten.

Mit Blick in Längsrichtung X geht die Leitfläche L in eine Führungsfläche K über, die sich parallel zu einer Y-Z-Ebene erstreckt und die an dieser Führungsfläche entlanggleitenden Produkte zu einer Bewegung genau in Querrichtung Y bzw. genau in die Förderrichtung des zweiten Förderbands B_{y} ausrichtet.

Der Grundkörper M des Auswerfers T ist von einer materialfreien Ausnehmung E durchsetzt. Dadurch wird das Gewicht des Auswerfers vorteilhaft reduziert, um die vom Servomotor zu überwindenden Massenkräfte möglichst gering zu halten.

### Bezugszeichen

- A: Auswerfervorrichtung
- Bₓ, B_{y}: Förderbänder
- C: Steuerung
- D₀: Ruheposition
- D₁, D₂..: Arbeitspositionen
- E: Ausnehmung
- F: Anschlagfläche
- K: Führungsfläche
- L: Leitfläche
- M: Grundkörper
- P: Produkt
- R: Servomotor
- S: Sensor
- T: Auswerfer
- U: Profilelement
- W: Weg
- X: Längsrichtung
- Y: Querrichtung
- Z: Höhenrichtung
- α: Leitwinkel

## Patentansprüche

1. Auswerfervorrichtung (A) zum gezielten Aussortieren eines oder mehrerer Produkte (P) aus einem Strom von Produkten (P), die in einer vorzugsweise horizontalen Längsrichtung (X) entlang eines Weges (W) gefördert werden, wobei sich ein von der Auswerfervorrichtung (A) umfasster Auswerfer (T) in Längsrichtung (X), in einer orthogonal dazu und vorzugsweise horizontalen Querrichtung (Y) und in einer zu beiden Richtungen (X, Y) orthogonalen und vorzugsweise vertikalen Höhenrichtung (Z) erstreckt,
a) wobei der Auswerfer (T) zwischen einer Ruheposition (D₀), in welcher er den Weg (W) freigibt, und wenigstens einer Arbeitsposition (D₁, D₂, D₃...), in welcher er in den Weg (W) gelangt, vor- und zurückbewegbar ist,
b) und wobei der Auswerfer (T) eine Anschlagfläche (F) aufweist und dazu ausgebildet ist, ein Produkt (P) während einer Schubbewegung mit der Anschlagfläche (F) seitlich zu beaufschlagen, um es dadurch in Querrichtung (Y) aktiv aus dem Weg (W) herauszuschieben und/oder herauszustoßen (Ausstoßen),
**dadurch gekennzeichnet,**
c) **dass** der Auswerfer (T) zusätzlich zur Anschlagfläche (F) wenigstens eine Leitfläche (L) mit einem Leitprofil aufweist, wobei das Leitprofil (L) mit der Längsrichtung (X) einen konstanten oder einen sich entlang der Querrichtung (Y) des Auswerfers ändernden Leitwinkel (α) einschließt, so dass während oder nach der Einnahme einer Arbeitsposition (D₁, D₂, D₃...) gegen die Leitfläche (L) geförderte Produkte (P) aufgrund ihrer Förderbewegung entlang der Leitfläche (L) aus dem Weg (W) seitlich heraus geleitet werden (Ausleiten).

2. Auswerfervorrichtung (A) nach Anspruch 1, **dadurch gekennzeichnet, dass** die Anschlagfläche (F) und/oder die Leitfläche (L) parallel zur Höhenrichtung (Z) verläuft.

3. Auswerfervorrichtung (A) nach einem der vorigen Ansprüche, **dadurch gekennzeichnet, dass** an die Leitfläche (L) eine Führungsfläche (K) anschließt, wobei die Absatzfläche nahezu parallel zu einer Y-Z-Ebene verläuft.

4. Auswerfervorrichtung (A) nach einem der vorigen Ansprüche, **dadurch gekennzeichnet, dass** ein X-Y-Querschnitt des Leitprofils eine Kurve umfasst.

5. Auswerfervorrichtung (A) nach einem der vorigen Ansprüche, **dadurch gekennzeichnet, dass** der das Leitprofil umfassende Abschnitt das Auswerfers (A) als separates, vorzugsweise werkzeuglos und modulartig mit dem Auswerfer verbindbares und austauschbares Profilelement (U) ausgebildet ist, um unterschiedliche Leitprofile am Auswerfer vorgeben zu können.

6. Auswerfervorrichtung (A) nach einem der vorigen Ansprüche, **dadurch gekennzeichnet, dass** der Auswerfer (T) zur Durchführung der Schubbewegung von einem Servomotor oder Linearantrieb (R) angetrieben wird.

7. Auswerfervorrichtung (A) nach einem der vorigen Ansprüche, ferner umfassend eine Steuerung (C), wobei die Steuerung dazu ausgebildet ist, die Schubbewegung des Auswerfers (T) nach einem vorgegebenen, vorzugsweise in der Steuerung hinterlegbaren und vorzugsweise produktabhängigen Bewegungsprofil durchzuführen.

8. Auswerfervorrichtung (A) nach dem vorhergehenden Anspruch, wobei das Bewegungsprofil den Abstand in Förderrichtung (X) wenigstens zweier stromaufwärts des Auswerfers (T) geförderter Produkte zueinander berücksichtigt.

9. Auswerfervorrichtung (A) nach einem der beiden vorhergehenden Ansprüche, wobei das Bewegungsprofil die Querposition eines herannahenden Produkts (P) bzw. seinen Y-Abstand von der Ruheposition (D₀) oder von einer Arbeitsposition (D₁, D₂, D₃...) berücksichtigt

10. Auswerfervorrichtung (A) nach einem der vorhergehenden Ansprüche, wobei die Geschwindigkeit, mit der sich ein ausgeleitetes Produkt (P) nach dem Kontakt mit dem Auswerfer (T) von diesem in Querrichtung (Y) fortbewegt, gezielt einstellbar ist
a) über eine speziell ausgewählte Form der Leitfläche (L),
und/oder
b) über ein speziell ausgewähltes Bewegungsprofil für den Auswerfer (T),
wobei in beiden Fällen vorzugsweise auch die Fördergeschwindigkeit der Produkte (P) entlang der Längsrichtung (X) berücksichtigt wird.

11. Anordnung einer Auswerfervorrichtung (A) nach einem der vorhergehenden Ansprüche an einem ersten Förderband (Bₓ), welches dazu ausgebildet ist, einen Strom von Produkten (P) in Längsrichtung (X) zu fördern, und wobei der Auswerfer so positioniert ist, dass er ausgewählte Produkte (P) aus dem Produktstrom ausstoßen oder ausleiten kann in Richtung auf einen Sammelbereich bzw. in einen Sammelbehälter oder auf ein ebenfalls vorgesehenes zweites Förderband (B_{y}), dessen Förderrichtung vorzugsweise orthogonal zur Längsrichtung (X) verläuft.
